# EUROPEAN PATENT APPLICATION

(11) **EP 1 500 961 A2**
(43) Date of publication of application: **26.01.2005**
(21) Application number: 04024107.7
(22) Date of filing: 29.10.2001
(51) Int. Cl.: G02B 6/43, G02B 6/38

(54) **Fiberoptic circuit board and method of forming an optical connection thereof by embedding an optical interface**

(30) Priority: 31.10.2000 US 244389 P
(62) Divisional of application: 01997157.1
(71) Applicant: Viasystems Group, Inc., St. Louis, MO 63105 (US)
(72) Inventor: Tourne, A.A.M., Joseph, 5709 MA, Helmond (NL)
(74) Representative: Ebner von Eschenbach, Jennifer

(57) **Abstract**

An optical connector for use in multilayer electro-optic circuit boards. An electro-optical back plane circuit board uses both electrical and optical connectors to carry signals in both electrical and light form. The optical connector employs redundant alignment features to provide for reliable connectivity between plug in boards and the electro-optic back plane. A process is of forming the back plane and other multilevel circuit boards so as to embed optical connectors is disclosed.

## Description

### CROSS-REFERENCE TO RELATED APPLICATIONS

This application claims priority under 35 U.S.C. § 119(e) from provisional application no. 60/244,389, filed October 31,2000. The 60/244,389 provisional application is incorporated by reference herein, in its entirety, for all purposes.

### INTRODUCTION

The present invention relates generally to the field of optical connectors for circuit boards. More particularly, the present invention relates to electro-optical back plane circuit boards that have both electrical and optical connectors.

### BACKGROUND OF THE INVENTION

Electronics devices are becoming increasingly integrated with optical systems. This has given rise to the need to integrate electronics and optics together into printed circuit board systems. Currently, this integration is somewhat awkward.

Although printed circuit wiring is a fairly mature technology, the mixing of printed circuit wiring with optical conduction paths is still at an awkward stage of development. Additionally, the connectors for interfacing optical conduction paths on circuit boards with fibers off-board is still a challenge. Specifically, aligning the off-board optical fibers with the connectors on the board remains a reliability problem.

Thus, what is needed is a printed circuit board configuration that reliably integrates electrical conduction with optic conduction, including stable optical connectors.

### SUMMARY OF THE INVENTION

One aspect of the present invention is an optical connector for use in a multilayer circuit board.

Another aspect of the present invention is a method for forming an electro-optical multilayer circuit board having embedded optical connectors.

It is also an aspect of the present invention to embed an optical connector in a multilayer circuit board using a guide plate and pins to align the optical connector with the various layers of the circuit board.

An additional aspect of the present invention is an electro-optical back plane having both electrical connectors and optical connectors.

One embodiment of the present invention is an optical connector for use with an electro-optical board. The optical connector includes a right angle interface body that has one or more first optical paths and one or more second optical paths. Each of the first optical paths corresponding to a respective second optical path, and the first optical paths are disposed in a first plane and the one or more second optical paths are disposed in a second plane. The first and second planes being substantially at light angles with respect to one another. The optical connector also includes a female self-alignment body that has a tapered channel substantially aligned with the first plane. The optical connector further includes a tapered male self-alignment body sized to fit closely into the tapered channel of the female self-alignment body, and having one or more third optical paths adapted to align with the first optical paths when the tapped male self-alignment body is engaged with the female self-alignment body. The third optical paths are adapted for connection to one or more optical fibers disposed outside the electro-optical board. The second optical paths are adapted for connection to optical fibers embedded in the electro-optical board.

Another embodiment of the present invention is a method of integrating into an optical-electrical board an optical connector that includes a right angle interface body, a female self-alignment body having a tapered channel, and an anchor body. The method includes the steps of connecting the right angle interface body to a set of one or more optical fibers, and embedding the right angle interface body and the one or more optical fibers inside the optical-electrical board. The method also includes the steps of forming a hole in the optical-electrical board to expose an upper surface of the embedded right angle interface body, securely fastening the anchor body about the hole, and inserting the female self-alignment body through the anchor body and the hole so as to bring the tapered channel into registration with the embedded right angle interface body.

Yet another embodiment of the present invention is an electro-optical back plane. The electro-optical back plane includes a fiber management system formed of plural optical fibers, an electrical bus circuit, and a board, wherein the fiber management system and the electrical bus circuit are embedded inside the board. The electro-optical back plane further includes plural optical connectors disposed on the board, each of the optical connectors being coupled to one or more of the plural optical fibers of the fiber management system. Additionally, the electro-optical back plane includes plural electrical connectors disposed on the board, each of the electrical connectors being electrically connected to the electrical bus circuit. Each of the optical connectors includes a right angle interface body embedded into the board for connection to one or more fibers of the fiber management system, an anchor body securely fastened to the surface of the board, and a female self alignment body having a tapered channel. The female self-alignment body is held by the anchor body so that the tapered channel is in registration with an upper surface of the right angle interface body.

### BRIEF DESCRIPTION OF THE DRAWINGS

Additional objects and advantages of the present invention will be apparent in the following detailed description read in conjunction with the accompanying drawing figures.

Fig. 1 illustrates a sectional exploded view of parts of an optical connector according to an embodiment of the present invention.

Fig. 2 illustrates a perspective view of a right angle interface body according to an embodiment of the present invention.

Fig. 3 illustrates a sectional view of the right angle interface body of Fig, 2.

Fig. 4 illustrates another sectional view of the right angle interface body of Fig. 2 (orthogonal to the sectional view of Fig. 3).

Fig. 5 illustrates an initial pre-assembly schematic view of various lamination layers for composing a multilayer printed circuit board according to an embodiment of the present invention,

Fig. 6 illustrates a post-lamination cross sectional view of a multilayer circuit board according to a process embodiment of the present invention,

Fig. 7 illustrates a cross sectional. view of a multilayer circuit board illustrating a machining step of a process embodiment of the present invention.

Fig. 8 illustrates a cross sectional view of a multilayer circuit board illustrating a connector assembly step of a process embodiment of the present invention.

Fig. 9 illustrates a cross sectional view of a multilayer circuit board illustrating another connector assembly step of a process embodiment of the present invention.

Fig. 10 illustrates a cross sectional detail view (per section line X in Fig. 9) showing the ratcheted interface between an anchor body and a female self-alignment body that form the female connector portion according to an embodiment of the present invention.

Fig. 11 illustrates a partial section view of a fully assembled optical connector according to an embodiment of the present invention.

Fig. 12 illustrates a schematic view of an electro-optical back plane according to an embodiment of the present invention.

### DETAILED DESCRIPTION OF THE PREFERRED EMBODIMENTS

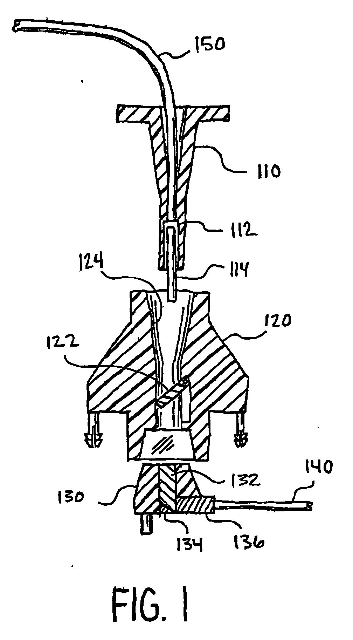

Referring to **Fig. 1**, and exploded sectional view of a connector according to an embodiment of the present invention is illustrated. A male connector portion **110** is insertable into a female connector portion **120**. The male and female connector portions **110,120** are tapered to fit together so as to provide a self-aligning function. A micro machined optical conductor assembly **112** in the male connector portion **110** is cause to be brought into precise alignment with another micro machined optical conductor assembly **132** disposed in a right angle interface body **130**. The female connector portion **120** guides the male connector portion **110** into precise registration with the right angle interface body **130**.

The housing parts of the optical connector are preferably formed of a high Tg material. Polyetherimide resins, and in particular ULTEM® resin (a product of GB), have been found to be a suitable as housing material to embody the invention.

The right angle interface body **130** is to be embedded inside a multi-layer circuit board. The female connector portion **120** mounts on a surface of the multi-layer circuit board, with a lower portion thereof extending down into the circuit board to engage the right angle interface body **130**. The micro machined optical conductor assembly **132** is disposed above an integrated mirror **134** that provided a 90° transition for light traveling through the connector. This reflected light also travels through an additional micro machined conductor assembly **136** that provides coupling to a plurality of optical fibers **140,** which are embedded inside the multilayer circuit board.

An optional feature of the optical connector **100** according to this embodiment is a spring-loaded door **122** inside the tapered passageway **124** of the female connector portion **120.** The spring-loaded door **122** provides two functions. First, it prevents debris from falling down inside the connector and contaminating the optical interface surface **131** on the top of the light angle interface body **130.** Secondly, the spring-loaded door **122** prevents light from being emitted through the tapered passageway **124** of the female connector portion **120** when no male connector portion **130** is inserted therein.

The female connector portion **120** is securely held to the surface of the multilayer circuit board via looking connectors **124** that are inserted into holes formed through the multilayer circuit board.

Off-board optical fibers **150** are connected into the male connector portion **110** so as to be in optical communication with the micro machined optical conductor assembly **112.** In addition to the self-aligning feature provided by the matched tapering shape of the male and female connector portions **110,120,** precision of alignment of the optical connector is enhanced by alignment pins **114** extending from the male connector portion that interdigitate with precisely machined alignment holes (not shown in this view) formed in the top side of the right angle interface body **130**.

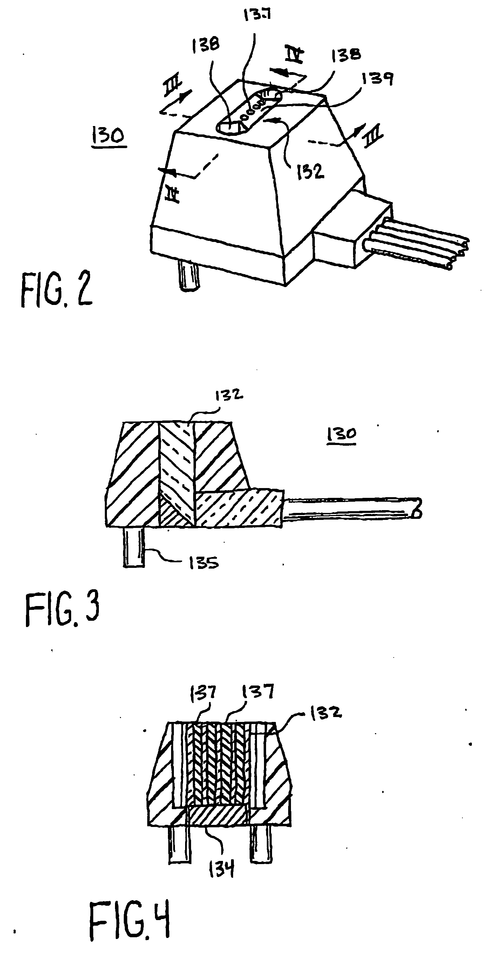

Referring to **Fig. 2,** a perspective view of the right angle interface body **130** is illustrated. The precision alignment holes **138** are disposed on either end of the optical conductor assembly **132.** Plural optical conductors **137** (preferably glass fibers) embedded in a silicon body **139** to form the optical conductor assembly **132.** The optical conductor assembly is principally formed of silicon. MT type optical connector devices have been found to be suitable for embodying these assemblies.

Referring to **Fig. 3,** a sectional view of the right angle interface body **130** of Fig. 2 is illustrated. Anchor members **135** extend downward from the bottom side of the right angle interface body **130** to provide enhanced mechanical stability inside the multilayer circuit board.

Referring to **Fig. 4,** another sectional view of the right angle interface body **130** of Fig. 2 is illustrated. Extending upwardly from the integrated mirror **134** through the micro machined optical conductor assembly **132** are plural glass fibers **137**.

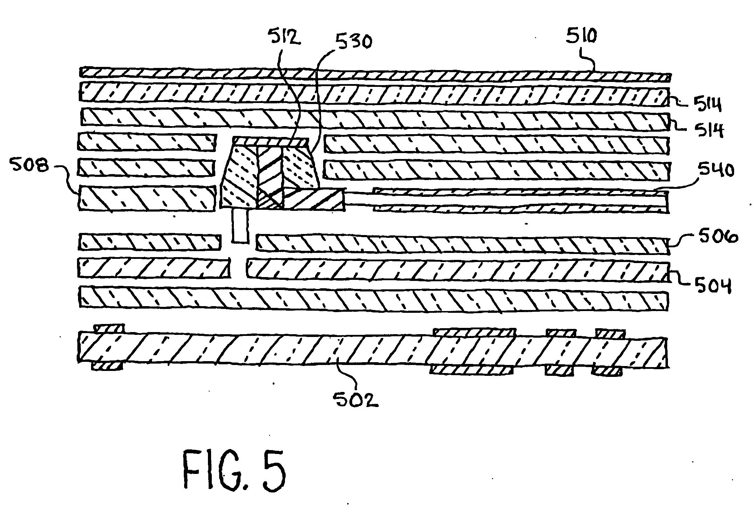

Referring to **Fig. 5,** an initial pre-assembly schematic view is illustrated, showing the relative position of various lamination layers for composing the multi-layer printed circuit board. One layer is an electrical inner layer **502** according to known prior art practices. A registration plate **504** is provided to keep the board structure flat and having alignment holes to align and fix the optical connector during bonding. A prepreg layer **506** for bonding and embedding optical management structures is provided above the laminate layer **504.** About the right angle interface body **530,** a laminate layer **508** is provided with the perimeter of the fiber management system **540** being routed out to compensate for thickness differences. An adhesive copper tape **512** is layered onto the top surface of the right angle interface body **530** to protect the glass fibers, alignment holes, and other surrounding structures from later processing steps. The copper tape **512** is adhered to the top surface of the right angle interface body **530** by an adhesive.
Preferably, the adhesive can withstand a temperature of at least 210°C and will not leave behind excessive residue when the copper tape **512** is later removed. Above the additional lamination layers **514,** an outer copper foil **510** is layered on as a top layer. The outer copper foil **510** is preferably about 18 micrometers in thickness.

The circuit board layers may be formed with any suitable materials that are known in the art. Standard circuit board materials are available from a number of manufacturers including Isola of the U.K., Nelco Products, Inc. of Fullerton, California, and Polyclad Laminates of Franklin, New Hampshire.

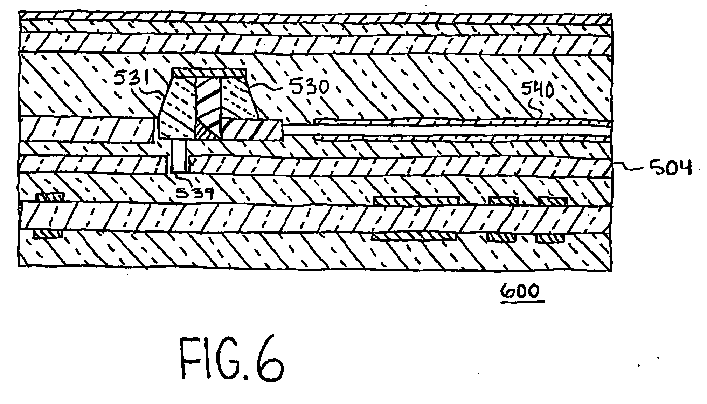

Referring to **Fig. 6,** a cross sectional view of the multilayer circuit board **600** is illustrated, post-lamination. The right angle interface body **530** is shown coupled to a fiber management system **540,** with both being embedded inside a multi-layer printed circuit board **600.** The right angle interface body **530,** a basic alignment component of the entire optical connector, is aligned to the circuit board **600** via a registration plate **504.** The registration plate **504** aligns and fixes the entire optical connector to the electrical pattern of the printed circuit board **600** by fixing the anchor members **539** into the registration plate **504.** The registration plate **504** is aligned to the other layers of the multi-layer printed circuit board **600** by using a traditional Lenkheit system.

The interlocking of the light angle interface body **530** with the registration plate **504** via the anchor members **539** aligns the optical connector both in the x-y plane of the board, as well as along the z axis.

It is noted that the right angle interface body **530** has angled sidewalls **531.** These angled sidewalls **531** serve a dual purpose. One reason for having the angles sidewalls **531** is to facilitate cleaning around the interface body **530** with a laser that is used to ablate away the board layers above the interface body **530.** The second useful purpose for the angled sidewalls is to provide for good alignment with the female connector portion.

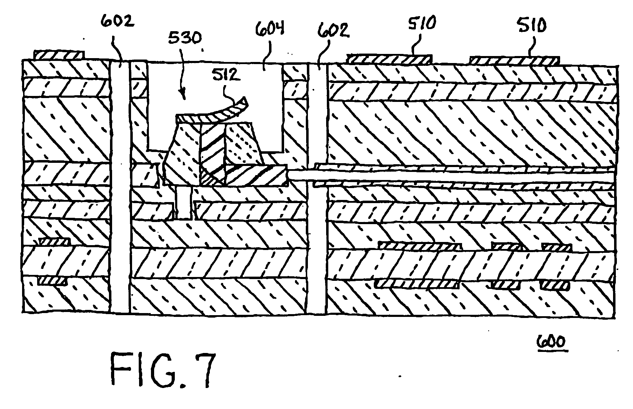

Referring to **Fig. 7,** the multilayer printed circuit board **600** is shown after machining steps have been conducted on the board. Holes **602** have been drilled through the board **600** for connecting the female connector portion **920** to the surface of the board. A hole **604** has been machined into the upper surface of the board **600** and so is to expose the right angle interface body **530**. The outer copper foil layer **510** has also been etched to provide conductive runs. At this time the copper tape **512** on the top of the right angle interface body **530** may be pealed off and the top surface of the right angle interface body cleaned **530**. The protective copper tape **512** is left on the top surface of the right angle interface body **530** until the board **600** has been electrically tested and finally inspected.

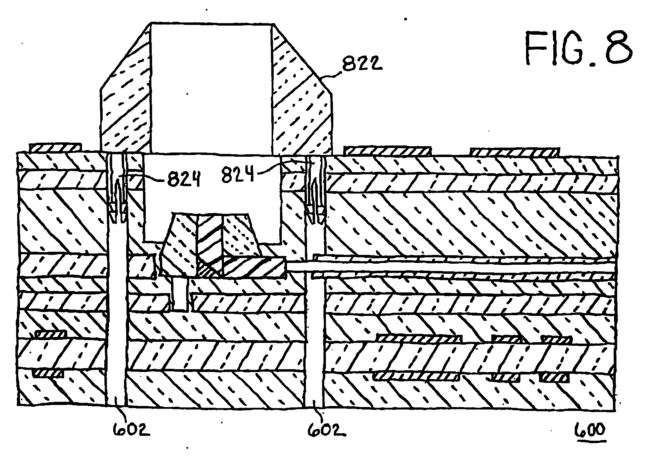

Referring to **Fig. 8,** the first step of assembling the female connector portion is illustrated. An anchor body **822** is securely engaged to the surface of the board **600** by inserting its anchors **824** into the holes **602** drilled in the board **600.**

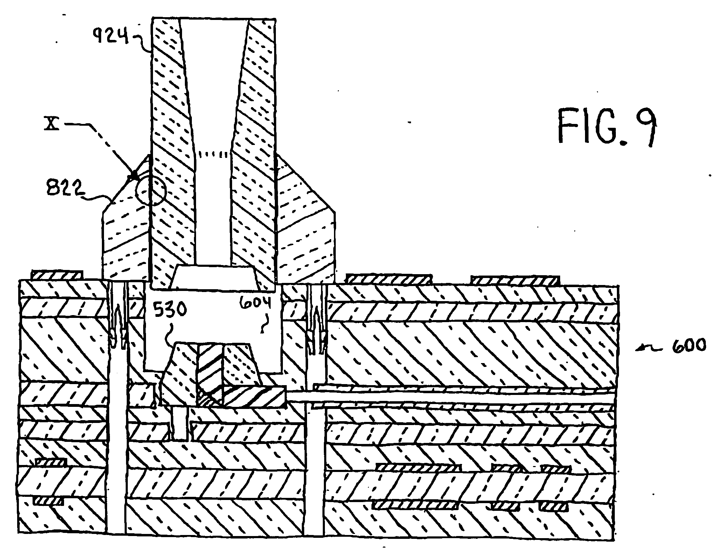

Referring to **Fig. 9,** a second step of assembling the female connector portion is illustrated. A female self-alignment body **924** is forced downward through the anchor body **822** and into the machined out hole **604** in to board **600** until it aligns with the imbedded right angle alignment body **530.**

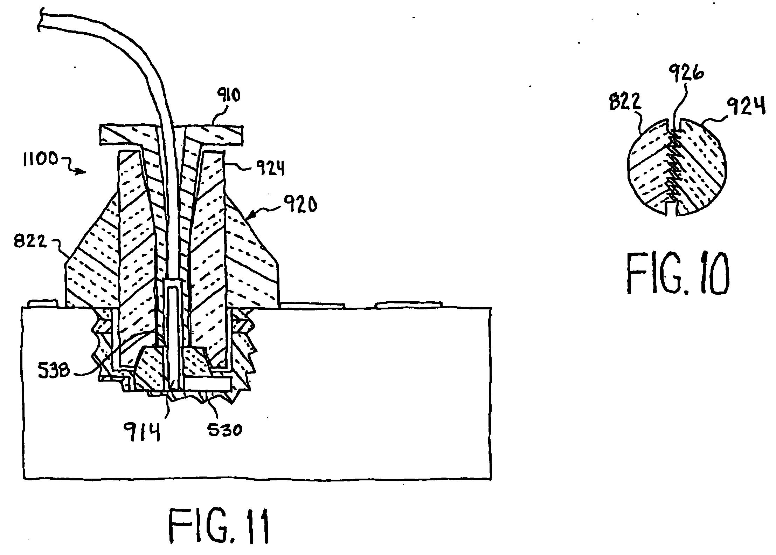

Referring to **Fig. 10,** a detail view of the interface between the anchor body **822** and the female self-alignment body **924** is illustrated. The anchor body **822** engages the female self-alignment body **924** via a one way ratchet **926.**

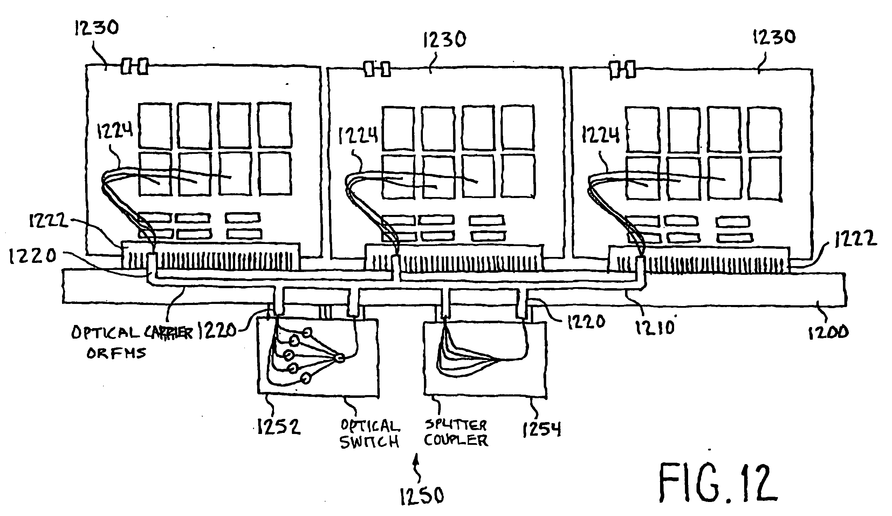

Referring to **Fig. 11,** the fully assembled optical connector **1100** is illustrated in a partial section view. A male self-alignment body **910** is inserted down into the female self-alignment body **920** (formed by the combination of the anchor body **822** and the female self-alignment body **924**) to guide the male connected portion into precise registration with the top surface of the right angle alignment body **530**. To insure precision of engagement between the optical paths of the male connector portion **910** with the optical paths of the right angle alignment body **530**, the alignment pins **914** of the male connector portion **910** are engaged with the precision machined holes **538** of the right angle alignment body **530**.

Referring to **Fig. 12**, an electro-optical back plane **1200** according to an embodiment of the present invention is illustrated. The back plane **1200** has an optical carrier **1210** (preferably a fiber management system) embedded with a number of optical connectors **1220** according to embodiments of the present invention. For interfacing printed circuit boards **1230** to the electro-optical back plane **1200**, optical connectors **1220** are placed adjacent to electrical connectors **1222**. The printed circuit boards **1230** are engaged with the electro-optical back plane **1200** using separate fibers **1224** on the board **1230** slotted into the electro optical back plane **1200** via both the electrical connectors **1222** and their corresponding optical connectors **1220**. Purely optical devices **1250** may also be plugged into the back plane **1200**. For example an optical switch **1252** is shown being connected to optical connectors **1220** alone, as is a splitter coupler device **1254**.

The present invention has been described in terms of preferred embodiments, however, it will be appreciated that various modifications and improvements may be made to the described embodiments without departing from the scope of the invention.

## Claims

1. A circuit board, comprising:
a plurality of layers (514, 508, 506);
an optical fiber (140) embedded between at least two of the layers (514, 540, 506); and
a right angle interface body (130, 530) connected to the optical fiber (140) and embedded between at least two of the layers (514, 540, 506).

2. The circuit board of claim 1, further comprising copper tape (512) layered onto a top surface of the right angle interface body (130, 530).

3. The circuit board of claims 1 or 2, wherein the right angle interface body (130, 530) further comprises anchor members (135) extending downwardly from a bottom side of the right angle interface body (130, 530).

4. The circuit board of claims 1, 2 or 3, further comprising an electrical inner layer (502).

5. The circuit board of claims 3 or 4, further comprising a registration plate (504) having alignment holes receiving the anchor members (135).

6. The circuit board of any one of claims 1-5, further comprising an outer copper foil layered on as a top layer.

7. The circuit board of any one of claims 1-6, wherein the right angle interface body (130, 530) includes angled sidewalls (531).

8. A method of forming an optical connector, comprising:
connecting a right angle interface body (130, 530) to a set of one or more optical fibers (140), the right angle interface body (130, 530) having one or more first optical paths and one or more second optical paths, each of the first optical paths being optically connected to a corresponding second optical path, wherein the first optical paths are disposed in a first plane and the one or more second optical paths are disposed in a second plane, the first and the second planes being substantially at right angles with respect to one another;
embedding the right angle interface body (130, 530) and the one or more optical fibers (140) inside an electro-optical board; and
forming a hole in the electro-optical board to expose a portion of the right angle interface body (130, 530) and thereby permit a set of one or more optical fibers disposed outside the elector-optical board to be optically connected to the first optical paths of the right angle interface body (130, 530).

9. The method of claim 8 further comprising:
providing a copper tape (512) on the right angle interface body (130, 530) to cover the first optical paths prior to embedding the right angle interface body (130, 530) inside the electro-optical board; and
removing the copper tape (512) from the right angle interface body (130, 530) after forming the hole in the electro-optical board.

10. The method of claim 8 further comprising the step of connecting the right angle interface body (130, 530) to a registration plate (504) prior to embedding the right angle interface body (130, 530).

11. The method of claim 8 wherein the right angle interface body (130, 530) has a plurality of anchor members (135) extending downwardly from a bottom side thereof, and wherein the step of connecting the right angle interface body (130, 530) to the registration plate (504) further comprises inserting the anchor member (135) of the right angle interface body (130, 530) into alignment holes provided in the registration plate (504).

12. The method of claim 8 further comprising:
securing a female body (120, 924) having a channel formed therethrough to the electro-optical board with the channel of the female body (120, 924) substantially aligned with the first optical paths of the right angle interface body (130, 530).

13. The method of claim 8 wherein the right angle interface body (130, 530) has an angled sidewall (531), and wherein the step of forming a hole in the electro-optical board to expose the right angle interface body (130, 530) further comprises exposing at least a portion of the angled sidewall (531) of the right angle interface body (130, 530).

14. The method of claim 13 further comprising:
securing a female body (120, 924) having a channel to the electro-optical board with the female body in registration with the angled sidewall (531) of the right angle interface body (130, 530) and the channel substantially aligned with the first optical paths of the right angle interface body (130, 530).

15. The method of claim 8 further comprising:
securing an anchor body (822) about the hole of the electro-optical board;
inserting a female body (120, 924) having a channel through the anchor body (822) and into the hole of the electro-optical board so that the channel of the female body (120. 924) is substantially aligned with the first optical paths of the right angle interface body (130, 530); and
securing the female body (120, 924) to the anchor body (822).

16. The method of claim 15 wherein the right angle interface body has an angled sidewall (531 ), wherein the step of forming a hole in the electro-optical board to expose an upper surface of the embedded right angle interface body (130, 530) further comprises exposing at least a portion of the angled sidewall (531) of the right angle interface body (130, 530), and wherein the step of securing the female body (120, 924) to the anchor body (822) further comprises:
securing the female body (120, 924) to the anchor body (822) with the female body (120, 924) in registration with the angled sidewall (531) of the right angle interface body (130, 530),

17. An optical connector for use with an electro-optical board, the optical connector comprising:
a right angle interface body having one or more first optical paths and one or more second optical paths, each of the first optical paths corresponding to a respective second optical path, wherein the first optical paths are disposed in a first plane and the one or more second optical paths are disposed in a second plane, the first and second planes being substantially at right angles with respect to one another;
a female self-alignment body having a tapered channel substantially aligned with the first plane; and
a tapered male self-alignment body sized to fit closely into the tapered channel of the female self-alignment body, and having one or more third optical paths adapted to align with the first optical paths when the tapered male self-alignment body is engaged with the female self-alignment body;
wherein the third optical paths are adapted for connection to one or more optical fibers disposed outside the electro-optical board, and
wherein the second optical paths are adapted for connection to optical fibers embedded in the electro-optical board.

18. A method of integrating into an optical-electrical board an optical connector that includes a right angle interface body, a female self-alignment body having a tapered channel, and an anchor body, the method comprising:
connecting a right angle interface body to a set of one or more optical fibers ;
embedding the right angle interface body and the one or more optical fibers inside the optical-electrical board;
forming a hole in the optical-electrical board to expose an upper surface of the embedded right angle interface body;
securely fastening the anchor body about the hole; and
inserting the female self-alignment body through the anchor body and the hole so as to bring the tapered channel into registration with the embedded right angle interface body.

19. An electro-optical back plane comprising:
a fiber management system formed of plural optical fibers;
an electrical bus circuit;
a board, wherein the fiber management system and the electrical bus circuit are embedded inside the board;
plural optical connectors disposed on the board, each of the optical connectors being coupled to one or more of the plural optical fibers of the fiber management system; and
plural electrical connectors disposed on the board, each of the electrical connectors being electrically connected to the electrical bus circuit;
wherein each of the optical connectors comprises:
a right angle interface body embedded into the board for connection to one or more fibers of the fiber management system;
an anchor body securely fastened to the surface of the board; and
a female self-alignment body having a tapered channel, wherein the female self-alignment body is held by the anchor body so that the tapered channel is in registration with an upper surface of the right angle interface body.
